# EUROPÄISCHE PATENTANMELDUNG

(11) **EP 0 634 228 A2**
(43) Veröffentlichungstag der Anmeldung: **18.01.1995**
(21) Anmeldenummer: 94107177.1
(22) Anmeldetag: 07.05.1994
(51) Int. Cl.: B08B 3/12, G01N 21/15

(54) **Anordnung zur Reinigung von Oberflächen oder Oberflächenbereichen von Unterwassergeräten**

(30) Priorität: 21.05.1993 DE 4317068
(71) Anmelder: GRUNDIG E.M.V. Elektro-Mechanische Versuchsanstalt Max Grundig GmbH & Co. KG, D-90762 Fürth (DE)
(72) Erfinder: Hallas, Ernst, Dr., GRUNDIG E.M.V., D-90748 Fürth (DE)

(57) **Zusammenfassung**

Anordnung zur Reinigung von Oberflächen (2) oder Oberflächenbereichen von Unterwassergeräten (1), bei denen die zu reinigende Oberfläche (2) bzw. der zu reinigende Oberflächenbereich durch mindestens einen Ultraschallsender (3) zu Schwingungen angeregt wird, um Verunreinigungen durch Bildung von Kavitation im Oberflächenbereich loszulösen,
dadurch gekennzeichnet, daß der oder die Ultraschallsender (3) direkt an der zu reinigenden Oberfläche (2) angebracht sind, und die zu reinigende Oberfläche (2) des Unterwassergerätes (3) eine Dicke von etwa einem Viertel der Wellenlänge des Ultraschalles aufweist.

Die Oberfläche (2) durch gezielte Beschallung von vor dieser Fläche angeordneten Ultraschallsendern (3) zu Schwingungen angeregt wird, wobei der Abstand der Ultraschallsender zu der zu reinigenden Oberfläche der halben Wellenlänge oder einem ganzzahligen Vielfachen der halben Wellenlänge der erzeugten Ultraschallschwingungen entspricht.

## Beschreibung

Die Erfindung betrifft eine Anordnung nach dem Oberbegriff des Anspruches 1.

Bei Geräten, die unter Wasser betrieben werden, insbesondere bei Meßgeräten, die optische Fenster aufweisen, wie zum Beispiel Trübungsmeßgeräten, ist es notwendig, zumindest die lichtdurchlässigen Oberflächenbereiche von Verschmutzungen freizuhalten bzw. angelagerte Verschmutzungen zu entfernen.

Bei bekannten Unterwassergeräten werden zu diesem Zweck verschiedene mechanische Reinigungsvorrichtungen, wie beispielsweise Scheibenwischer oder Reinigungskolben, verwendet. Diese mechanischen Anordnungen haben insbesondere den Nachteil, daß sie wasserdicht und resistent sein müssen. Dies führt zu erheblichem Konstruktionsaufwand, wobei die Lebensdauer derartiger Anordnungen durch die Umgebungsbedingungen trotzdem wesentlich geringer ist als bei vergleichbaren Reinigungsanordnungen, die nicht unter Wasser betrieben werden.

Es ist weiterhin bekannt, Unterwassergeräte mit einem Druckwasserstrahl zu reinigen, wobei bei zahlreichen Anwendungen die Geräte unter Wasser gereinigt werden. Hier liegen die Nachteile insbesondere darin, daß ein wesentlich höherer Wasserdruck aufgebracht werden muß als bei entsprechenden Reinigungsverfahren über Wasser. Aus diesem Grund wird häufig in zeitlichen Abständen das Unterwassergerät aus dem Wasser herausgehoben, um es mit Druckwasserstrahlen zu reinigen.
Dieses Verfahren ist aber konstruktiv sehr aufwendig und es wird zumeist Bedienungspersonal benötigt.

Die gleichen Nachteile ergeben sich auch bei Reinigungsverfahren, die mit Druckluft arbeiten.

Aus anderen technischen Gebieten sind Reinigungsverfahren mit Ultraschall bekannt.

Zur Reinigung von Oberflächen von Gegenständen ist beispielsweise aus der deutschen Offenlegungsschrift DE 25 23 631 A1 ein Verfahren bekannt, bei dem in einen Behälter, der mit Ultraschallsendern zum Aussenden von Ultraschall in einer bestimmten Richtung versehen ist, der zu reinigende Gegenstand eingebracht wird. Der Behälter ist mit einer Reinigungsflüssigkeit versehen. Nach dem Reinigungsvorgang im Ultraschallbad wird der Gegenstand aus dem Behälter entfernt und mit einer Spülflüssigkeit gespült. Anschließend wird der Gegenstand getrocknet. Dieses Verfahren hat jedoch den Nachteil, daß ein Behälter vorgesehen sein muß, in den der Gegenstand eingebracht werden kann. Bei Unterwassergeräten ist dieses Reinigungsverfahren nicht anwendbar, da ein Behälter mit Ultraschallanregung unter Wasser nicht oder nur unvorteilhaft einsetzbar ist. Insbesondere wäre bei einem derartigen Reinigungsverfahren ein sehr großer Behälter erforderlich und ein großer Teil der Ultraschallenergie würde in das den Behälter umgebende Wasser geleitet, so daß sich ein schlechter Wirkungsgrad ergibt.

Eine ähnliche Vorrichtung zur Reinigung von Gegenständen mittels Ultraschall ist aus der deutschen Offenlegungsschrift DE 39 33 519 A1 bekannt. Dort wird ebenfalls ein Reinigungssystem mit einem Gefäß zur Aufnahme von Reinigungslösungen, in die der zu reinigende Gegenstand eingebracht wird, beschrieben. Die Ultraschallschwinger sind an einer Platte, die Teil des Gefäßes ist, befestigt und von einem Ring umgeben, um die Ausbildung von stehenden Biegewellen zu verhindern. Weiterhin soll durch diese Anordnung erreicht werden, daß das Gefäß nicht zerstört wird und die Ultraschallenergie voll ausgenutzt wird. Es wäre zwar durch die Anordnung der Ultraschallschwinger ein besserer Wirkungsgrad erreichbar, jedoch würde immer noch ein großer Teil der Ultraschallenergie in das umliegende Wasser fließen.

Aus der deutschen Patentschrift DE-PS 937 683 ist ferner ein Verfahren zum Reinigen von mit verschmutzter Flüssigkeit bespülten Gegenständen bekannt, bei dem der zu reinigende Gegenstand bzw. der diesen Gegenstand umgebenden Flüssigkeit Schwigungen, insbesondere Ultraschallschwingungen, aufgedrückt werden, die zur Ablösung eines eventuell vorhandenen Schmutzbelages führen sollen.

Bei diesem Verfahren wirkt es sich als nachteilig aus, daß die zu reinigenden Gegenstände nicht in einem begrenzten, mit Flüssigkeit gefüllten Raum, untergebracht werden, so daß die zur Reinigung aufzuwendende Ultraschallenergie auf Grund des geringen Wirkungsgrades sehr groß ist.

Aufgabe der Erfindung ist es daher eine Anordnung zur Reinigung von Unterwassergeräten anzugeben, bei der die obigen Nachteile vermieden werden.

Diese Aufgabe wird bei einer Anordnung nach dem Oberbegriff des Anspruches 1 gemäß der Erfindung durch die kennzeichnenden Merkmale des Anspruches 1 gelöst.

Erfindungsgemäß wird die zu reinigende Oberfläche bzw. der zu reinigende Oberflächenbereich eines Unterwassergerätes zu Schwingungen im Ultraschallbereich angeregt. Auf diese Weise werden Verunreinigungen durch Bildung von Kavitation vom Oberflächenbereich losgelöst. Durch die Anregung der Oberfläche zu Schwingungen wird der Wirkungsgrad erhöht, da die Ultraschallenergie direkt auf die Oberfläche einwirkt und nicht, wie beim Stand der Technik, mittelbar zugeführt wird. So kann die zur Reinigung benötigte Ultraschallenergie verringert werden, wodurch ein Dauerbetrieb ermöglicht wird, ohne daß die Oberfläche zerstört wird.
Im Gegensatz zu Ultraschallbädern kann bei der erfindungsgemäßen Anordnung die Reinigung der Oberfläche bzw. des Oberflächenbereiches auch während des Betriebes des Unterwassergerätes durchgeführt werden, so daß sich keine Ausfallzeiten ergeben.

Eine vorteilhafte Ausführungsform der Erfindung sieht vor, daß der oder die Ultraschallerzeuger direkt an der Oberfläche, die gereinigt oder von der Verunreinigungen ferngehalten werden sollen, angebracht sind. Diese Ausführungsform ist insbesondere bei Unterwassergeräten vorteilhaft, bei denen bereits eine Ultraschallreinigung im Entwicklungsstadium vorgesehen wird und somit die Ultraschallerzeuger bereits in der Entwicklung eingeplant werden.

Die benötigte Ultraschallenergie kann wesentlich verringert werden, wenn die zu reinigende Oberfläche, beispielsweise eine Plexiglasscheibe, die Dicke von einem Viertel der Ultraschallwellenlänge aufweist. So stößt der Ultraschall nach einem Laufweg von etwa /4 auf eine Phasengrenze, an der maximale Reflexion und minimale Transmission vorliegt. Folglich liegt bei dieser Dimensionierung der Oberfläche maximale Vibration der Oberfläche vor, so daß bereits mit geringer Ultraschallenergie ein guter Reinigungseffekt erzielt wird.

Vorwiegend bei Unterwassergeräten, bei denen die Ultraschallreinigung nachträglich vorgesehen wird, ist es vorteilhaft, die zu reinigende Oberfläche durch gezielte Beschallung mit Ultraschallsendern zu Schwingungen anzuregen. Dazu werden vor der zu reinigenden Fläche Ultraschallsender angebracht. Der Abstand der Ultraschallsender beträgt vorzugsweise /2, d.h. die halbe Wellenlänge der Ultraschallschwingungen, oder ein ganzzahliges Vielfaches davon. Bei diesem Abstand liegt maximale Transmission der Ultraschallenergie vor, d.h. es wird die maximale Ultraschallenergie auf die Oberfläche übertragen und somit ein hoher Wirkungsgrad erreicht.

Eine weitere Ausführungsform sieht vor, daß vor der zu reinigenden Oberfläche eine Blende angeordnet wird, die aus einem Material besteht, das gut durch Ultraschall anzuregen ist. An dieser Blende wird mindestens ein Ultraschallsender angebracht, um die gesamte Blende in Schwingungen zu versetzen. So wird vor der zu reinigenden Oberfläche ein Schallfeld erzeugt, das sowohl Schutz vor Verunreinigung bietet als auch die Oberfläche zu Schwingungen anregt, wodurch der Reinigungseffekt erzielt wird.

Durch die direkte Anregung der zu reinigenden Oberfläche mit Ultraschall kann sich auch im Inneren des Unterwassergerätes ein Schallfeld ausbreiten, das unter Umständen zu einer Beeinträchtigung der Funktionsweise führen kann.
Aus diesem Grund ist es vorteilhaft, am Unterwassergerät mittels einer schwingungsgedämpften, wasserdichten Ankopplung eine lichtdurchlässige Scheibe anzubringen. Bei dieser Ausführungsform wird die Oberfläche des Unterwassergerätes, die frei von Verunreinigungen gehalten werden soll, durch eine Scheibe abgedeckt. Diese Scheibe wird mittels Ultraschall gereinigt, wobei die Anregung des Unterwassergerätes mit Ultraschall durch die schwingungsgedämpfte Ankopplung vermieden wird. Die schwingungsgedämpften Koppelelemente werden vorzugsweise an Knotenlinienbereichen der lichtdurchlässigen Scheibe angebracht, d.h. an Bereichen der Scheibe, die schwingungsfrei sind.

Um Schallfelder im Unterwassergerät zu vermeiden kann auch ein Ultraschallempfänger mit einer Auswerteeinheit im Inneren des Unterwassergerätes angeordnet werden. Es wird die Frequenz und die Intensität des Ultraschalles im Inneren des Gerätes bestimmt. Weiterhin ist ein Ultraschallsender vorgesehen, der von der Auswerteeinheit angesteuert wird und Ultraschall der gleichen Frequenz, aber phasenverschoben und mit geringer Intensität aussendet. Durch die Überlagerung des Ultraschalls im Inneren des Gerätes wird ein nahezu konstanter Schalldruck erzeugt, der keinen Einfluß mehr ausübt.

Durch eine kontinuierliche Anregung der Oberflächen mit Ultraschall wird bereits die Verschmutzung dieser Oberflächen verhindert. Die Ultraschallerzeuger können so mit geringer Leistung betrieben werden und es sind gleichmäßige Bedingungen während des gesamten Betriebes des Unterwassergerätes gegeben. So muß beispielsweise bei einem Trübungssensor nicht in kurzen Abständen eine Referenzmessung durchgeführt werden, da sich keine Veränderungen in der Durchlässigkeit eines optischen Fensters ergeben.

Im folgenden wird die Erfindung an Hand der Figuren 1 bis 4 erläutert. Es zeigen:
Figur 1 eine Anordnung, bei der die Ultraschallerzeuger im Inneren eines Unterwassergerätes angeordnet sind,
Figur 2 eine Anordnung, bei der die zu reinigende Oberfläche von außen zu Schwingungen angeregt wird,
Figur 3 eine Anordnung mit einer Blende vor der zu reinigenden Oberfläche, und
Figur 4 eine Anordnung mit einer lichtdurchlässigen Scheibe vor der freizuhaltenden Oberfläche.

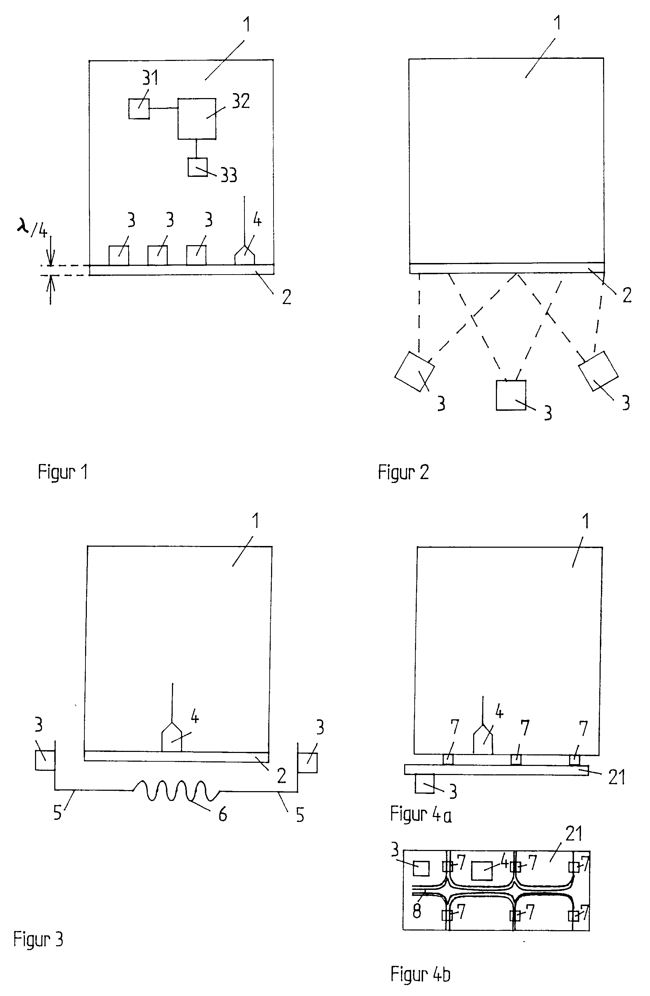

Figur 1 zeigt ein Unterwassergerät 1 mit einer zu reinigenden Oberfläche 2, die zumindest teilweise aus durchsichtigem Material, beispielsweise Plexiglas, der Dicke /4 besteht. bezeichnet die Wellenlänge der Ultraschallschwingungen. Im Inneren des Unterwassergerätes 1 sind fest an der Oberfläche 2 die Ultraschallerzeuger 3 angeordnet, um sie in Schwingung zu versetzen. Weiterhin ist im Inneren des Unterwassergerätes 1 ein Ultraschallempfänger 31 angeordnet, der mit einer Auswerteeinheit 32 verbunden ist. Mit der Auswerteeinheit 32 wird der im Ultraschallsensor 31 empfangene Ultraschall bezüglich Frequenz und Intensität ausgewertet und der Ultraschallsender 33 angesteuert. Der Ultraschallsender 33 erzeugt Ultraschallwellen mit der gleichen Frequenz, mit der die Ultraschallerzeuger 3 senden, jedoch mit einer Phasenverschiebung um /2. Durch den Ultraschallerzeuger 33 im Inneren des Unterwassergerätes werden Einflüsse des Ultraschalls, der durch die Ultraschallerzeuger 3 verursacht wird, ausgeglichen und somit Bauteile vor Zerstörung oder Beeinträchtigung der Funktionsweise geschützt.
Die Anordnung nach Figur 1 enthält weiterhin einen optischen Sensor 4, mit dem beispielsweise die Trübung des Wassers bestimmt werden kann. Bei der Trübungsmessung wird nach dem bekannten Stand der Technik das Meßfenster in bestimmten Zeitabständen gereinigt. In der Zwischenzeit verschmutzt dieses Meßfenster jedoch langsam, so daß zwischenzeitlich Referenzmessungen vorgenommen werden müssen, um genaue Meßwerte zu erhalten. Bei der erfindungsgemäßen Ultraschallreinigung, die vorzugsweise kontinuierlich durchgeführt wird, können diese Referenzmessungen entfallen, da das Meßfenster kontinuierlich von Verschmutzungen gereinigt wird bzw. die Verunreinigung von Anfang an verhindert wird.

Figur 2 zeigt ein Beispiel einer Anordnung, bei der die zu reinigende Oberfläche 2 von Außen durch die Ultraschallerzeuger 3 zu Schwingungen angeregt wird. Der Abstand der Ultraschallerzeuger 3 zur Oberfläche 2 beträgt vorteilhafterweise /2 oder ein ganzzahliges Vielfaches davon, wobei wieder die Wellenlänge des in den Ultraschallerzeugern 3 erzeugten Ultraschalles bezeichnet.

Figur 3 zeigt ein Beispiel einer Anordnung mit einer Blende 5, die vor der zureinigenden Oberfläche 2 angeordnet ist. Diese Blende 5 wird durch die Ultraschallerzeuger 3 zu Schwingungen angeregt, so daß in der Blendenöffnung ein Ultraschallvorhang 6 erzeugt wird, der sowohl einen Schutz vor Verunreinigung der Oberfläche 2 bildet als auch die Oberfläche 2 zu Schwingungen anregt, um die oben beschriebene Reinigungswirkung zu erzielen.

Figur 4a zeigt ein Beispiel mit einer an der zu reinigenden Oberfläche mittels schwingungsdämmender, wasserdichter Koppelelemente 7 angeordneten, vorzugsweise lichtdurchlässigen Scheibe 21. An dieser Scheibe 21 sind einer oder mehrere Ultraschallschwinger 3 angebracht, die sie zu Schwingungen anregt. Die Koppelelemente 7 sind vorzugsweise so angeordnet, daß sie sich in Bereichen der Scheibe 21 befinden, an denen keine Schwingung auftritt. Figur 4b zeigt eine Draufsicht auf die Scheibe 21. Bei der Ultraschallanregung der Scheibe bilden sich sogenannte Chladnische Klangfiguren aus, d.h. Bereiche, an denen bei Erregung stehender Wellen auf der Scheibe 21 keine Bewegung auftritt. Die Form dieser Klangfiguren ist von der Form und Beschaffenheit der Scheibe 21 und der Ultraschallfrequenz abhängig. Die Linien, an denen keine Bewegung, d.h. keine Schwingung, auftritt, sind in der Figur 4b durch die Linien 8 dargestellt. Der bzw. die Ultraschallerzeuger 3 und der oder die optischen Meßeinheiten 4 werden in Bereichen angeordnet, an denen Schwingungen auftreten, d.h. in denen der Reinigungseffekt am größten ist.

Die Chladnischen Klangfiguren treten auch bei der Anregung der Oberfläche gemäß den Figuren 1 bis 3 auf. Auch bei diesen Ausführungsbeispielen ist darauf zu achten, daß insbesondere die optischen Meßeinrichtungen 4 in Bereichen angeordnet sind, in denen Schwingungen auftreten.

## Patentansprüche

1. Anordnung zur Reinigung von Oberflächen (2) oder Oberflächenbereichen von Unterwassergeräten (1), bei denen die zu reinigende Oberfläche (2) bzw. der zu reinigende Oberflächenbereich durch mindestens einen Ultraschallsender (3) zu Schwingungen angeregt wird, um Verunreinigungen durch Bildung von Kavitation im Oberflächenbereich loszulösen,
**dadurch gekennzeichnet,** daß der oder die Ultraschallsender (3) direkt an der zu reinigenden Oberfläche (2) angebracht sind, und die zu reinigende Oberfläche (2) des Unterwassergerätes (3) eine Dicke von etwa einem Viertel der Wellenlänge des Ultraschalles aufweist.

2. Anordnung nach Anspruch 1,
**dadurch gekennzeichnet,** daß die zu reinigende Oberfläche (2) eine am Unterwassergerät (1) angebrachte lichtdurchlässige Scheibe (21) ist, wobei diese Scheibe (21) durch wasserundurchlässige, schwingungsdämmende Koppelelemente (7) mit dem Unterwassergerät (1) verbunden ist.

3. Anordnung nach Anspruch 2,
**dadurch gekennzeichnet**, daß die Koppelelemente (7) an Knotenlinienbereichen (8), in denen keine Schwingungen der Oberfläche (21) auftreten, angeordnet sind.

4. Anordnung zur Reinigung von Oberflächen (2) oder Oberflächenbereichen von Unterwassergeräten (1), bei denen die zu reinigende Oberfläche (2) bzw. der zu reinigende Oberflächenbereich durch mindestens einen Ultraschallsender (3) zu Schwingungen angeregt wird, um Verunreinigungen durch Bildung von Kavitation im Oberflächenbereich loszulösen,
**dadurch gekennzeichnet,** daß die Oberfläche (2) durch gezielte Beschallung von vor dieser Fläche angeordneten Ultraschallsendern (3) zu Schwingungen angeregt wird, wobei der Abstand der Ultraschallsender zu der zu reinigenden Oberfläche der halben Wellenlänge oder einem ganzzahligen Vielfachen der halben Wellenlänge der erzeugten Ultraschallschwingungen entspricht.

5. Anordnung nach Anspruch 4,
**dadurch gekennzeichnet,** daß der zu reinigenden Oberfläche (2) eine Blende (5) aus gut durch Ultraschall anzuregendem Material vorgelagert wird, an der mindestens ein Ultraschallsender (3) direkt angeordnet ist.

6. Anordnung nach einem der Ansprüche 1 bis 5,
**dadurch gekennzeichnet,** daß im Inneren des Unterwassergerätes (1) ein Ultraschallempfänger (31) mit einer Auswerteeinrichtung (32) angeordnet ist, der die Frequenz und Intensität des Ultraschalles im Inneren des Unterwassergerätes (1) bestimmt, und
weiterhin ein Ultraschallsender (33) vorgesehen ist, der Ultraschall mit gleicher Frequenz, aber phasenverschoben aussendet.

7. Anordnung nach Anspruch 6,
**dadurch gekennzeichnet,** daß der Ultraschallsender (33) im Inneren des Unterwassergerätes (1) Ultraschall mit geringerer, höchstens gleicher Intensität wie die im Inneren gemessene Intensität erzeugt.

8. Anordnung nach einem der Ansprüche 1 bis 7,
**dadurch gekennzeichnet,** daß die Anregung der Oberfläche (2,21) kontinuierlich erfolgt.
